# EUROPÄISCHE PATENTSCHRIFT

(11) **EP 3 892 086 B1**
(45) Veröffentlichungstag und Bekanntmachung des Hinweises auf die Patenterteilung: **16.04.2025**
(21) Anmeldenummer: 21157688.9
(22) Anmeldetag: 17.02.2021
(51) Int. Cl.: A01F 25/16, A01F 25/22

(54) **VERFAHREN UND ANORDNUNG ZUR HERSTELLUNG VON SILAGE**
METHOD AND ARRANGEMENT FOR PRODUCING SILAGE
PROCÉDÉ ET AGENCEMENT DE PRODUCTION D'ENSILAGE

(30) Priorität: 07.04.2020 DE 102020204475
(43) Veröffentlichungstag der Anmeldung: 13.10.2021
(73) Patentinhaber: Deere & Company, Moline, IL 61265 (US)
(72) Erfinder: von Holst, Christian, 68163 Mannheim (DE); Brocke, Stefan, 68163 Mannheim (DE)
(74) Vertreter: Holst, Sönke

(56) Entgegenhaltungen:
- WO-A1-2015/041556
- WO-A2-2008/073841
- CN-A- 110 301 538
- DE-A1- 102010 028 707
- FR-A1- 2 518 970

## Beschreibung

Die Erfindung betrifft ein Verfahren und eine Anordnung zur Silierung von Erntegut.

### Stand der Technik

Silage ist eine Art von Futter, das aus grünblättrigen Pflanzen hergestellt wird, welche in einem Silo eingelagert und durch eine Versäuerung stabilisiert werden. Die Versäuerung erfolgt mittels einer Gärung. Die fertige Silage kann an Kühe, Schafe und andere Wiederkäuer verfüttert werden. Der Einlager- und Gärprozess wird als Silierung bezeichnet und erfolgt unter Verwendung kompletter Graspflanzen (nicht nur der Fruchtstände), wie Mais, Sorghum oder anderer Cerealien.

In der Vergangenheit wurde die Gärung durch indigene Mikroorganismen durchgeführt; heutzutage hingegen wird die Silage mit Siliermitteln beaufschlagt, in welchen spezielle Mikroorganismen enthalten sind, um die Gärung zu beschleunigen oder die Silage zu verbessern. Siliermittel können eine oder mehrere Stämme von Milchsäurebakterien enthalten, üblicherweise *Lactobacillus plantarum.* Andere verwendete Bakterien umfassen die Sorten *Lactobacillus buchneri, Enterococcus faecium und Pediococcus.*

Die im Silo eingelagerte und abgedeckte Silage wird demnach einer anaeroben Gärung unterzogen, die etwa 48 Stunden nach der Befüllung des Silos beginnt, und in den Pflanzen enthaltenen Zucker in Säure umwandelt. Die Gärung ist nach etwa 2 Wochen im Wesentlichen beendet. Bevor die anaerobe Gärung beginnt, gibt es eine aerobe Phase, in welcher der in der Silage enthaltene Sauerstoff verbraucht wird. Die Packungsdichte des Futters bestimmt die Qualität der erhaltenen Silage, da sie über den Luftsauerstoffanteil die im Silo auftretenden chemischen Reaktionen beeinflusst.

Wenn das Futter gut verdichtet wird, ist der Vorrat an Sauerstoff begrenzt und die sich ergebende säurebasierte Vergärung bewirkt eine Zerlegung der vorhandenen Kohlenhydrate in Essig-, Butter und Milchsäure. Ein derartiges Silageprodukt wird als saure Silage bezeichnet.

Wenn jedoch andererseits das Futter nicht gut verdichtet oder lose abgelegt wird oder das Silo erst nach und nach gefüllt wird, verläuft die Oxidation schneller und die Temperatur steigt an. Ähnliches passiert bei Schäden in der Abdeckung der Silage oder bei vorzeitiger Öffnung des Silos. In diesen Fällen kann der eindringende Sauerstoff der Luft zur Produktion von Ammoniak oder Buttersäure führen und die Silage kann im schlimmsten Fall vergiften und nicht mehr als Tierfutter verwendet werden. Falls der Gärprozess nicht sorgfältig durchgeführt und kontrolliert wird, nimmt somit die saure Silage durch übermäßige Produktion an Ammoniak oder Buttersäure (letztere ist für den Geruch ranziger Butter verantwortlich) einen unangenehmen Geruch an. Für die Herstellung von Silage hoher Qualität ist es demnach wichtig, das Futter hinreichend gut zu verdichten, um den nachteiligen Einfluss von Sauerstoffeinschlüssen zu vermeiden.

Im Stand der Technik wurde zur Vermeidung der beschriebenen Probleme neben einer Automatisierung der Verdichtung (s. EP 3 403 488 A1) vorgeschlagen, die Silage unter Vakuum zu erzeugen, d.h. in einem Zelt einzulagern, aus dem anschließend die Luft ausgepumpt wird (DE 10 2006 005 933 A1) oder kleinere Portionen der Silage in Kunststoffbehältern einzuschweißen, aus denen die Luft ausgepumpt oder die mit einem Schutzgas wie Stickstoff befüllt werden (DE 37 04 175 A1).

Die CN 110 301 538 A beschreibt ein Silo, das nach Befüllung und Abdichtung einmalig oder in bestimmten Intervallen mit einem sauerstofffreien Gas, wie Biogas oder sauerstofffreie Luft beaufschlagt wird, um das im Silo befindliche Gas ganz oder teilweise zu ersetzen, um Silageverluste durch Luftsauerstoff zu vermindern. Durch einen Sensor kann die aus dem Silo verdrängte Luft erfasst werden, um darauf basierend die Befüllung mit dem sauerstofffreien Gas zu beenden. Durch einen anderen Sensor kann der Druck im Silo erfasst werden, der höher als der Umgebungsdruck ist und im Fall eines Druckabfalls wird ein Alarm gegeben, um das Leck reparieren zu lassen.

### Aufgabe

Während die Verdichtung, ob sie nun automatisch oder unter menschlicher Kontrolle erfolgt, den Ausschluss von Sauerstoff in der Silage nicht immer in hinreichendem Maße sicherstellen kann, ist das Auspumpen von größeren Silos in landwirtschaftlichen Betrieben aufgrund des Aufwandes, ein luftdichtes Behältnis zu schaffen, nicht wirtschaftlich darstellbar, was analog auch für das Einfüllen der Silage in ausgepumpte oder mit Schutzgas befüllte Kunststoffbehälter gilt.

Die vorliegende Erfindung hat sich daher die Aufgabe gestellt, den Gärvorgang in einem im üblichen Maßstab in landwirtschaftlichen Betrieben angelegtem Silo auf eine wirtschaftliche Weise zu verbessern und dort insbesondere den unerwünschten Einfluss des Luftsauerstoffs auf den Gärvorgang zu vermeiden oder zumindest zu reduzieren.

### Lösung

Die vorliegende Erfindung wird durch die Patentansprüche definiert.

Ein Verfahren zur Silierung von Erntegut umfasst folgende Schritte:
Verteilen und Verdichten von Silage aus zerkleinerten Grünpflanzen in einem Silo,
Abdichten des Silos,
Vergären der Silage im Silo, und
Fluten zumindest eines Teils der Silage nach einer aeroben Phase der Vergärung mit einem inerten Gas.

Auf diese Weise werden mit relativ einfachen und auch im größeren Maße wirtschaftlich umsetzbaren Mitteln die nachteiligen Einflüsse von Sauerstoff aus der Luft auf die Silage nach der aeroben Phase der Gärung (zur Erläuterung wird auf die Beschreibungseinleitung verwiesen) vermindert oder unterbunden, indem die Silage mit dem inerten Gas geflutet wird, bei dem es sich beispielsweise um Stickstoff oder ein Edelgas handeln kann. Es wäre auch denkbar, das Gas auch schon in der aeroben Phase, d.h. vor der anaeroben Phase der Gärung in das Silo einzuleiten, z.B. um die aerobe Phase zu beschleunigen.

Ein Eindringen von Luftsauerstoff in die Silage wird durch einen Sensor erfasst und dient zur selbsttätigen Ansteuerung eines Ventils, durch welches das inerte Gas aus einem Behälter durch eine oder mehrere Leitungen in die Silage geleitet wird. Hierbei wird nur der Bereich des Silos mit Gas geflutet, in dem ein oder mehrere Sensoren ein Eindringen von Luftsauerstoff nachweisen.

Das Ende der aeroben Phase kann durch die mehreren Sensoren erfasst werden und zur selbsttätigen Ansteuerung des Ventils dienen, durch welches das inerte Gas aus einem Behälter durch eine oder mehrere Leitungen in die (gesamte) Silage oder einem Teil davon geleitet wird.

Die Sensoren können konfiguriert sein, das Ende der aeroben Phase und/oder das Eindringen von Sauerstoff anhand der Temperatur der Silage und/oder anhand eines oder mehrerer Reaktionsprodukte eindringenden Luftsauerstoffs und/oder einer durch die Reaktionsprodukte beeinflusste Größe (z.B. pH-Wert der Silage) und/oder den Sauerstoff direkt zu erfassen.

Anhand der Signale der Sensoren kann die Position einer Anschnittstelle erkannt werden, an welcher das Silo zur Entnahme von Silage geöffnet wird, um darauf basierend durch geeignete Ansteuerung des Ventils eine Öffnung der Düsen zu verhindern, die anderenfalls das Gas in leere Bereiche des Silos abgeben würden. Anhand der Signale der Sensoren kann zudem der Sauerstoffanteil in der Silage in der Nachbarschaft der Anschnittstelle erfasst und nötigenfalls (bei Überschreitung eines Schwellenwerts) die jeweils benachbarten Düsen oder alle Düsen des Silos mit Gas beaufschlagt werden. Die Erkennung der Anschnittstelle kann in einer anderen Ausführungsform auch mit einer Kamera oder einer beliebigen anderen Sensorik erfasst und zur

Steuerung des Ventils genutzt werden.

Eine Anordnung zu Silierung von Emtegut umfasst ein Silo zur Aufnahme von Silage aus zerkleinerten Grünpflanzen, das einen Boden und eine Abdichtung der Silage umfasst, und in dem die Silage vergärbar ist, wobei Mittel zum Fluten der Silage mit einem inerten Gas nach einer aeroben Phase des Gärvorgangs vorgesehen sind. Das Silo ist demnach mit der aus zerkleinerten Grünpflanzen bestehenden Silage befüllbar und in dem Silo kann die Silage durch Fahrzeuge oder andere geeignete Vorrichtungen verdichtet werden. Ein anderer Anwendungsbereich der vorliegenden Erfindung ist ein Silotank (Vertikalsilo), der mit Silage befüllt wird.

Die Anordnung ist mit mehreren Sensoren ausgestattet, die konfiguriert sind, ein Eindringen von Luftsauerstoff in die Silage zu erfassen und steuernd mit einem verstellbaren Ventil gekoppelt sind, durch welches als Reaktion auf das erkannte Eindringen des Luftsauerstoffs selbsttätig das inerte Gas aus einem Behälter durch eine oder mehrere Leitungen nur in den Bereich des Silos geführt wird, in dem ein Eindringen von Luftsauerstoff nachgewiesen wird.

Die Sensoren können konfiguriert sein, das Ende der aeroben Phase der Vergärung der Silage im Silo zu erfassen, und steuernd mit dem verstellbaren Ventil gekoppelt sein, durch welches als Reaktion auf das erkannte Ende selbsttätig das inerte Gas aus einem Behälter durch die eine oder mehrere Leitungen in die Silage führbar ist.

### Ausführungsbeispiel

In den Figuren wird eine Ausführungsform der Erfindung gezeigt, die im Folgenden näher erläutert wird. Es zeigen:
- Fig. 1: eine perspektivische Ansicht eines Silos, und
- Fig.2: einen vertikalen Schnitt durch das Silo entlang der Linie 2-2 der Figur 1.

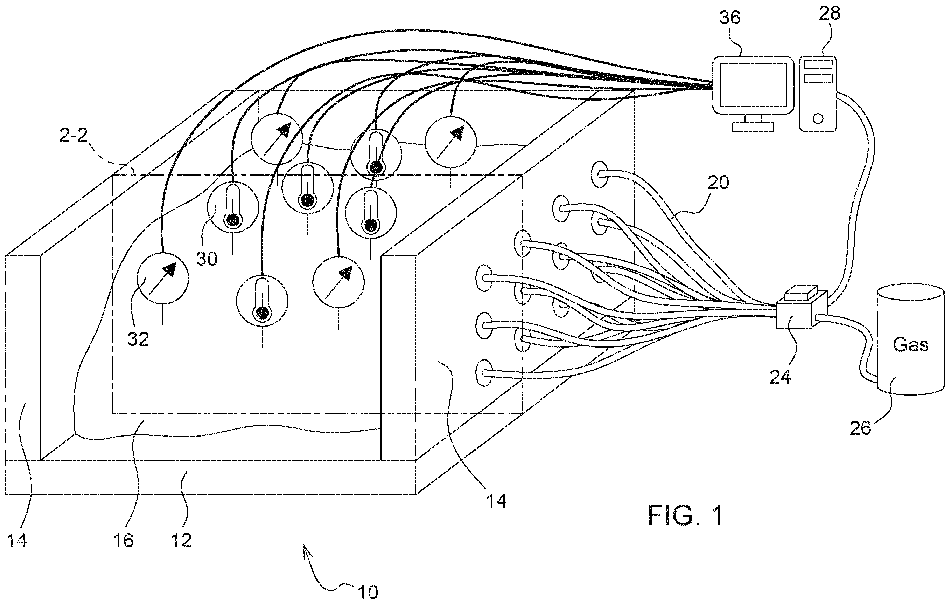

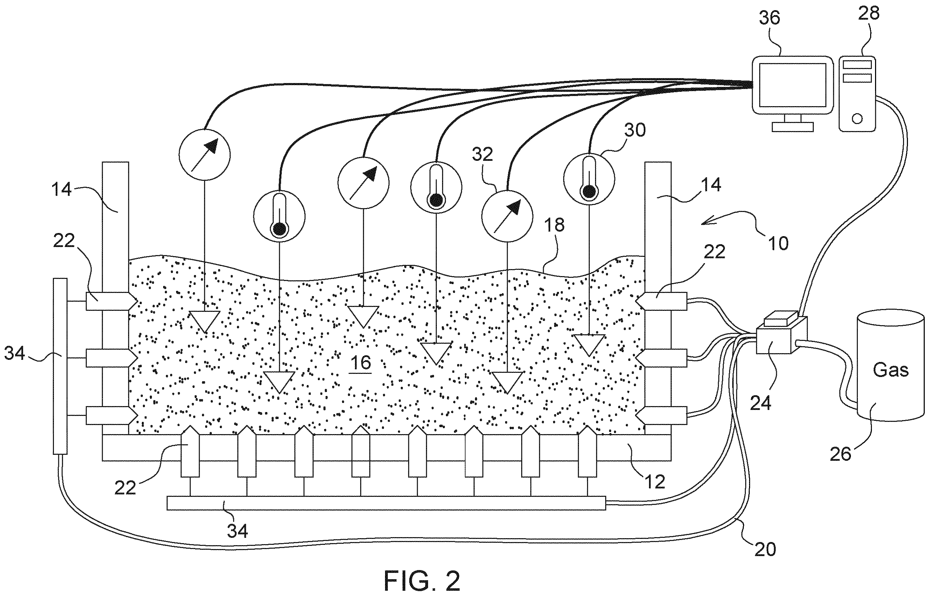

In der Figur 1 ist ein Silo 10 in Form eines so genannten Silobunkers gezeigt. Das Silo umfasst einen Boden 12 und seitliche Wände 14, die üblicherweise sämtlich aus Beton hergestellt sind. Das Silo 10 ist als Fahrsilo ausgeführt, in welches zerkleinerte Grünpflanzen eingebracht, verteilt und verdichtet werden, wie im Stand der Technik an sich bekannt (EP 3 403 487 A1, EP 3 403 488 A1, deren Offenbarung durch Verweis mit in die vorliegenden Unterlagen aufgenommen wird), und ist daher nach vorn und hinten hin offen. Die im Folgenden als Silage 16 bezeichneten, zerkleinerten Grünpflanzen können bei der Ernte oder während des oder nach dem Einlagern mit einem Siliermittel beaufschlagt werden, um die Vergärung zu verbessern. Zudem wird die Silage 16 nach dem Verdichten nach oben und zu den offenen Seiten des Silos 10 hin mit einer Folie 18 (s. Figur 2) abgedeckt, um sie gegen den Sauerstoff der umgebenden Luft abzuschirmen.

Im Boden 12 und in den Wänden 14 sind Öffnungen vorgesehen, durch die sich gasführende Leitungen 20 erstrecken. An den Innenseiten des Bodens 12 und der Wände 14 sind Düsen 22 angeordnet, durch welche das in den Leitungen 20 herangeführte Gas in den Innenraum des Silos 10 und somit in die Silage 16 einströmen kann. Die Leitungen 20 sind mit dem Ausgang eines Ventils 24 verbunden, dessen Eingang mit einem Behälter 26 (z.B. einer Gasflasche) verbunden ist, der mit unter Druck stehendem Gas befüllt ist.

Es wäre auch denkbar, die Leitungen 20 durch Öffnungen in der Folie 18 zu führen, um das Silo 10 von oben her zu beaufschlagen. Die Leitungen würden auch durch Öffnungen in der Folie 18 geführt, wenn die Silage 16 in einem Haufen aufgeschichtet wird, der nach oben und zu allen Seiten hin durch Folie 18 abgedeckt wird. Bei einer anderen Ausführungsform ist das Silo als vertikaler Tank ausgeführt, der mit der Silage befüllt wird. Die Verdichtung erfolgt dort durch das Eigengewicht der Silage oder zusätzliche Mittel, und die Düsen 22 werden in den Boden und die Wände des Tanks eingebaut.

Das Ventil 24 ist mittels eines Rechners 28 steuerbar, der seinerseits mit Sensoren 30 und 32 verbunden ist. Der Rechner 28 könnte auch als Mobilgerät (Smartphone o.ä.) ausgeführt sein und das Ventil 24 drahtlos kontrollieren. Das Ventil 24 kann durch den Rechner 28 zumindest zwischen einer Öffnungs- und Schließstellung bewegt werden und in einer fortgeschrittenen Ausführungsform auch in eine oder mehrere Zwischenstellung(en).

Die innerhalb der Silage 16 angeordneten Sensoren 30 erfassen die Temperatur der Silage 16 und die Sensoren 32 bestimmte Inhaltsstoffe der Silage 16, insbesondere solche, die auf unerwünschte Fäulnis hindeuten (z.B. Buttersäure oder Ammoniak oder den pH-Wert), oder dienen zur Erfassung von Sauerstoff. Die Sensoren 32 können beispielsweise als Nahinfrarotspektrometer o.ä. ausgeführt sein. Es wäre auch möglich, mit den Sensoren 32 die Menge des Gases aus dem Behälter 26 zu erfassen, das sich in der Umgebung des Sensors 32 befindet, um bei Erreichen eines vorbestimmten Drucks oder Gasanteils das Ventil 24 wieder schließen zu können.

Die Sensoren 30, 32 können, wie in den Figuren 1 und 2 gezeigt, durch Kabel mit dem Rechner 28 verbunden sein (in diesem Fall wären die Stellen, an denen das besagte Kabel durch die Folie 18 hindurchtritt, abgedichtet oder die Kabel liegen unter der Folie 18 und werden zwischen dem Boden 12 oder den Seitenwänden 14 einerseits und der Folie 18 andererseits verlegt und dort ist eine geeignete Abdichtung vorgesehen, um den Eintritt von Luftsauerstoff zu vermeiden), oder sie sind drahtlos mit dem Rechner 28 signalübertragend verbunden, z.B. durch Radiowellen.

Anders als in den Figuren 1 und 2 dargestellt, kann jeder Düse 22 und Leitung 20 ein Ventil 24 individuell zugeordnet sein, oder es sind jeweils mehrere Düsen 22 mit einer Sammelschiene 34 verbunden, der ein eigenes Ventil 24 zugeordnet ist, wie in der Figur 2 für die Düsen 22 am Boden 12 und an der linken Wand 14 gezeigt. Mit anderen Worten können die Düsen 22 durch den Rechner 28 und das Ventil 24 einzeln oder gruppenweise angesteuert werden, wobei die Gruppen lokal benachbarte Düsen 22 umfassen, sei es für den gesamten Boden 12 oder einen Teil davon oder für eine gesamte Wand 14 oder einen begrenzten Teil davon, mit vertikal oder horizontal oder in beide Richtungen benachbarten Düsen 22. Denkbar wäre jedoch auch eine gleichzeitige Beaufschlagung aller Düsen 22 mittels eines einzigen Ventils 24. Stromauf oder stromab des Ventils 24 oder darin integriert kann auch ein Druckminderer (nicht gezeigt) vorgesehen sein.

Bei dem Gas im Behälter 26 handelt es sich um ein chemisch inaktives (inertes) Gas, wie ein Edelgas (Helium, Argon etc.) oder Stickstoff. Das Silo 10 wird somit, nach der Befüllung mit der Silage 16 und deren Verdichtung und Abdeckung mit der Folie 18 und dem Abschluss der aeroben Phase der Vergärung mit dem Gas befüllt, um zu verhindern, dass die Silage 16 durch möglicherweise eindringenden Luftsauerstoff verdirbt.

Das Beaufschlagen des Silos 10 mit dem Gas kann im einfachsten Fall durch eine Bedienereingabe in den Rechner 28 erfolgen, zum Beispiel wenn der Landwirt nach Betrachtung des Silos 10 zu der Erkenntnis kommt, dass die aerobe Phase zu Ende ist. Hierfür wäre auch denkbar, auf die Sensoren 30, 32 und den Rechner 28 zu verzichten und das Ventil 24 von Hand zu betätigen. Bei einer fortgeschrittenen Ausführungsform hingegen erkennt der Rechner 28 anhand der Signale der Sensoren 30 und/oder 32 das Ende der aeroben Phase und öffnet das Ventil 24, ggf. nach einer Anzeige der beabsichtigten Füllung des Silos 10 mit dem Gas auf einer Bedienerschnittstelle 36 und dem Erhalt einer Bestätigungseingabe des Landwirts mittels einer Tastatur o.ä.

Dabei kann die Befüllung des Silos 10 mit Gas, bei individueller oder gruppenweiser Ansteuerung der Düsen 22 zuerst von unten her (durch Beaufschlagen der unten angeordneten Düsen 22) erfolgen, wenn das Gas im Behälter 26 leichter als Luft ist, wie beispielsweise im Fall von Helium, oder analog von oben her, durch Beaufschlagen der oben angeordneten Düsen 22, wenn das Gas im Behälter 26 schwerer als Luft ist. Das einströmende Gas verdrängt eventuell in der Silage 16 noch vorhandenen oder durch ein Leck in der Folie 18 oder zwischen der Folie 18 und den Wänden 14 oder dem Boden 12 eindringenden Luftsauerstoff und verhindert unerwünschte Faulvorgänge in der Silage.

Es wäre alternativ oder zusätzlich auch denkbar, die Silage 16 nur dann mit dem Gas aus dem Behälter 26 zu beaufschlagen, wenn ungewünschte Reaktionen in der Silage durch Luftsauerstoff auftreten oder (z.B. im Fall von direktem Nachweis von Sauerstoff durch einen Sensor 32) auftreten können, was anhand der Signale der über das gesamte Silo 10 verteilten Sensoren 30, 32 durch den Rechner 28 erkennbar ist. In diesem Fall kann entweder das gesamte Silo 10 mit Gas beaufschlagt werden oder es werden nur die Düsen 22 einzeln oder gruppenweise beaufschlagt, welche dem die unerwünschte Reaktion oder deren Möglichkeit nachweisenden, benachbarten Sensor(en) 30 und/oder 32 benachbart sind. Zudem kann ggf. basierend auf den Signalen der Sensoren 30, 32 ein Warnhinweis auf der Bedienerschnittstelle 36 hinsichtlich der Position und ggf. Größe des Lecks erfolgen, damit der Landwirt nötigenfalls das Leck abdichten kann. Die Sensoren 30 erfassen eventuelle Temperaturanstiege, die auf eine unerwünschte Reaktion hindeuten und die Sensoren 32 die Produkte einer unerwünschten Reaktion (indirekte Erfassung) und/oder eintretenden Luftsauerstoff (direkte Erfassung). Die Sensoren 32 könnten auch als Sensoren zur Erfassung des pH-Werts der Silage 16 ausgeführt sein, welcher ebenfalls durch eindringenden Luftsauerstoff beeinflusst wird.

Die Signale der Sensoren 30, 32 können auch dazu dienen, die Position einer Anschnittstelle zu erkennen, an welcher das Silo 10 zur Entnahme von Silage 16 geöffnet wird, um darauf basierend durch den Rechner 28 und das Ventil 24 (bei Einzel- oder Gruppenansteuerung der Düsen 22) eine Öffnung der Düsen 22 zu verhindem, die anderenfalls das Gas in leere (nicht mehr mit Silage 16 befüllte) Bereiche des Silos 10 abgeben würden. Alternativ oder zusätzlich dienen die Sensoren 30, 32 dazu, den Sauerstoffanteil in der Silage 16 (bzw. unerwünschte Reaktionsprodukte, wie Buttersäure oder Ammoniak, s. oben) in der Nachbarschaft der Anschnittstelle zu erfassen und nötigenfalls die jeweils benachbarten Düsen 22 oder vorsorglich alle Düsen 22 des Silos 10 (ggf. mit Ausnahme der Düsen 22, die ihr Gas in die Bereiche des Silos 10 abgeben würden, die bereits entleert sind) mit Gas aus dem Behälter 26 zu beaufschlagen.

## Patentansprüche

1. Verfahren zur Silierung von Erntegut, mit folgenden Schritten:
Verteilen und Verdichten von Silage (16) aus zerkleinerten Grünpflanzen in einem Silo (10),
Abdichten des Silos (10),
Vergären der Silage (16) im Silo (10), und
Fluten zumindest eines Teils der Silage (16) nach einer aeroben Phase des Vergärens mit einem inerten Gas,
wobei Sensoren (30, 32) ein Eindringen von Luftsauerstoff in die Silage (16) erfassen,
**dadurch gekennzeichnet, dass** ein durch einen oder mehrere der Sensoren (30, 32) erfasstes Eindringen von Luftsauerstoff in die Silage (16) zur selbsttätigen Ansteuerung eines Ventils (24) dient, durch welches das inerte Gas aus einem Behälter (28) durch eine oder mehrere Leitungen (20) in die Silage (16) geleitet wird, wobei nur der Bereich des Silos (10) mit inertem Gas beaufschlagt wird, in dem ein oder mehrere Sensoren (30, 32) ein Eindringen von Luftsauerstoff nachweisen.

2. Verfahren nach Anspruch 1, wobei das Ende der aeroben Phase durch die Sensoren (30, 32) erfasst wird und zur selbsttätigen Ansteuerung des Ventils (24) dient.

3. Verfahren nach einem der Ansprüche 1 oder 2, wobei die Sensoren konfiguriert sind, das Ende der aeroben Phase und/oder das Eindringen von Sauerstoff anhand der Temperatur der Silage (16) und/oder anhand eines oder mehrerer Reaktionsprodukte eindringenden Luftsauerstoffs und/oder davon beeinflusster Größen und/oder den Sauerstoff direkt zu erfassen.

4. Verfahren nach einem der Ansprüche 1 bis 3, wobei anhand der Signale der Sensoren (30, 32) die Position einer Anschnittstelle erkannt wird, an welcher das Silo (10) zur Entnahme von Silage (16) geöffnet wird, um darauf basierend eine Öffnung von Düsen (22) zu verhindern, die anderenfalls das Gas in leere Bereiche des Silos (10) abgeben würden.

5. Verfahren nach Anspruch 4, wobei anhand der Signale der Sensoren (30, 32) der Sauerstoffanteil in der Silage (16) in der Nachbarschaft der Anschnittstelle erfasst und bei Überschreitung eines Schwellenwerts die jeweils benachbarten Düsen (22) oder alle Düsen (22) des Silos (10) mit Gas beaufschlagt werden.

6. Anordnung zur Silierung von Erntegut, mit einem Silo (10) zur Aufnahme von Silage (16) aus zerkleinerten Grünpflanzen, das einen Boden (12) und eine Abdichtung (18) der Silage (16) umfasst und in dem die Silage (16) vergärbar ist, wobei Mittel zum Fluten zumindest eines Teils der Silage (16) nach einer aeroben Phase des Gärvorgangs mit einem inerten Gas vorgesehen sind und mehrere Sensoren (30, 32) konfiguriert sind, ein Eindringen von Luftsauerstoff in die Silage zu erfassen, **dadurch gekennzeichnet, dass** die Sensoren (30, 32) steuernd mit einem verstellbaren Ventil (24) gekoppelt sind, durch welches das inerte Gas aus einem Behälter (28) durch eine oder mehrere Leitungen (20) nur in den Bereich des Silos (10) führbar ist, in dem ein Eindringen von Luftsauerstoff nachgewiesen wird.

7. Anordnung nach Anspruch 6, wobei die Sensoren (30, 32) konfiguriert sind, das Ende der aeroben Phase der Vergärung der Silage (16) im Silo (10) zu erfassen.

## Claims

1. Method for silaging harvested crops, comprising the following steps:
distributing and compacting silage (16) consisting of shredded foliage plants in a silo (10), sealing the silo (10),
fermenting the silage (16) in the silo (10), and
flushing at least one part of the silage (16) with an inert gas after an aerobic phase of the fermentation,
wherein sensors (30, 32) detect a penetration of atmospheric oxygen into the silage (16),
**characterized in that** a penetration of atmospheric oxygen into the silage (16) detected by one or more of the sensors (30, 32) serves for the automatic activation of a valve (24), by which the inert gas is conducted from a container (28) through one or more lines (20) into the silage (16), wherein only the region of the silo (10) in which one or more sensors (30, 32) establish a penetration of atmospheric oxygen is supplied with inert gas.

2. Method according to Claim 1, wherein the end of the aerobic phase is detected by the sensors (30, 32) and serves for the automatic activation of the valve (24).

3. Method according to either of Claims 1 and 2, wherein the sensors are configured to detect the end of the aerobic phase and/or the penetration of oxygen on the basis of the temperature of the silage (16) and/or on the basis of one or more reaction products of penetrating atmospheric oxygen and/or variables influenced thereby and/or to detect the oxygen directly.

4. Method according to one of Claims 1 to 3, wherein the signals of the sensors (30, 32) are used to identify the position of an interface at which the silo (10) is opened for removing silage (16), so as on this basis to prevent an opening of nozzles (22) which would otherwise discharge the gas into empty regions of the silo (10).

5. Method according to Claim 4, wherein the signals of the sensors (30, 32) are used to detect the oxygen component in the silage (16) in the vicinity of the interface and, when a threshold value is exceeded, gas is supplied to the respectively adjacent nozzles (22) or all of the nozzles (22) of the silo (10).

6. Arrangement for silaging harvested crops, comprising a silo (10) for receiving silage (16) consisting of shredded foliage plants, which comprises a base (12) and a seal (18) for the silage (16) and in which the silage (16) is able to be fermented, wherein means are provided for flushing at least one part of the silage (16) with an inert gas after an aerobic phase of the fermentation process and one or more sensors (30, 32) are configured to detect a penetration of atmospheric oxygen into the silage, **characterized in that** the sensors (30, 32) are coupled in a controlling manner to an adjustable valve (24), by which the inert gas can be guided from a container (28) through one or more lines (20) only into the region of the silo (10) in which a penetration of atmospheric oxygen is established.

7. Arrangement according to Claim 6, wherein the sensors (30, 32) are configured to detect the end of the aerobic phase of the fermentation of the silage (16) in the silo (10).

## Revendications

1. Procédé d'ensilage de produits de récolte, avec les étapes suivantes :
la répartition et le compactage d'ensilage (16) de plantes vertes broyées dans un silo (10),
l'étanchéification du silo (10),
la fermentation de l'ensilage (16) dans le silo (10), et
l'inondation d'au moins une partie de l'ensilage (16) après une phase aérobie de la fermentation avec un gaz inerte,
des capteurs (30, 32) détectant une pénétration d'oxygène de l'air dans l'ensilage (16),
**caractérisé en ce qu'**une pénétration d'oxygène de l'air dans l'ensilage (16) détectée par un ou plusieurs des capteurs (30, 32) sert à commander automatiquement une soupape (24), par laquelle le gaz inerte est acheminé d'un réservoir (28) à l'ensilage (16) par une ou plusieurs conduites (20), seule la zone du silo (10) dans laquelle un ou plusieurs capteurs (30, 32) détectent une pénétration d'oxygène de l'air étant alimentée en gaz inerte.

2. Procédé selon la revendication 1, dans lequel la fin de la phase aérobie est détectée par les capteurs (30, 32) et sert à commander automatiquement la soupape (24).

3. Procédé selon l'une quelconque des revendications 1 ou 2, dans lequel les capteurs sont configurés pour détecter la fin de la phase aérobie et/ou la pénétration d'oxygène à partir de la température de l'ensilage (16) et/ou à partir d'un ou plusieurs produits de réaction de l'oxygène de l'air pénétrant et/ou de grandeurs influencées par celui-ci et/ou l'oxygène directement.

4. Procédé selon l'une quelconque des revendications 1 à 3, dans lequel on détecte, à l'aide des signaux des capteurs (30, 32), la position d'une interface à laquelle le silo (10) est ouvert pour le prélèvement de l'ensilage (16), afin d'empêcher, sur cette base, une ouverture de buses (22) qui, sinon, libéreraient le gaz dans des zones vides du silo (10).

5. Procédé selon la revendication 4, dans lequel, à l'aide des signaux des capteurs (30, 32), la proportion d'oxygène dans l'ensilage (16) au voisinage de l'interface est détectée et, en cas de dépassement d'une valeur seuil, les buses (22) respectivement voisines ou toutes les buses (22) du silo (10) sont alimentées en gaz.

6. Agencement pour l'ensilage de produits de récolte, avec un silo (10) destiné à recevoir de l'ensilage (16) de plantes vertes broyées, qui comprend un fond (12) et une étanchéité (18) de l'ensilage (16) et dans lequel l'ensilage (16) peut être fermenté, des moyens étant prévus pour inonder au moins une partie de l'ensilage (16) après une phase aérobie du processus de fermentation avec un gaz inerte et plusieurs capteurs (30, 32) étant configurés pour détecter une pénétration d'oxygène de l'air dans l'ensilage, **caractérisé en ce que** les capteurs (30, 32) sont couplés de manière commandée à une soupape réglable (24), par laquelle le gaz inerte peut être guidé à partir d'un réservoir (28) par une ou plusieurs conduites (20) uniquement dans la zone du silo (10) dans laquelle une pénétration d'oxygène de l'air est décelée.

7. Agencement selon la revendication 6, dans lequel les capteurs (30, 32) sont configurés pour détecter la fin de la phase aérobie de la fermentation de l'ensilage (16) dans le silo (10).
